# EUROPÄISCHE PATENTSCHRIFT

(11) **EP 3 642 567 B1**
(45) Veröffentlichungstag und Bekanntmachung des Hinweises auf die Patenterteilung: **19.01.2022**
(21) Anmeldenummer: 18731417.4
(22) Anmeldetag: 13.06.2018
(51) Int. Cl.: G01D 5/20, H01F 38/14

(54) **DREHWINKELSENSOR**
ROTATIONAL ANGLE SENSOR
CAPTEUR D'ANGLE DE ROTATION

(30) Priorität: 23.06.2017 DE 102017210655
(43) Veröffentlichungstag der Anmeldung: 29.04.2020
(73) Patentinhaber: Robert Bosch GmbH, 70442 Stuttgart (DE)
(72) Erfinder: UTERMOEHLEN, Fabian, 71229 Leonberg (DE); MERZ, Andreas, 71691 Freiberg Am Neckar (DE)
(86) Internationale Anmeldenummer: PCT/EP2018/065569
(87) Internationale Veröffentlichungsnummer: WO 2018/234108

(56) Entgegenhaltungen:
- EP-A2- 2 570 776
- DE-A1- 19 738 836
- DE-A1-102004 027 954
- DE-A1-102015 220 615

## Beschreibung

### Gebiet der Erfindung

Die Erfindung betrifft einen Drehwinkelsensor, mit dem beispielsweise ein Drehwinkel zwischen einer Welle und einem weiteren Bauteil bestimmt werden kann. Außerdem betrifft die Erfindung ein Statorelement für einen derartigen Drehwinkelsensor. Der Ausdruck umfassen wird im Rahmen dieser Anmeldung synonym zum Ausdruck aufweisen verwendet.

### Stand der Technik

Um Drehwinkel zu messen, sind beispielsweise Drehwinkelsensoren bekannt, bei denen ein Magnet über einen entsprechenden Magnetfeldsensor gedreht wird. Die Messung des Magnetfeldvektors erlaubt dann einen Rückschluss auf den Drehwinkel. Derartige Sensoren reagieren auch auf externe Magnetfelder, die beispielsweise durch einen Stromfluss von benachbart angeordneten Stromkabeln verursacht werden und können sehr störempfindlich sein.

Ein weiterer Typ Drehwinkelsensor nutzt einen Wirbelstromeffekt aus. Dabei wird beispielsweise ein metallisches Target über Sensorspulen bewegt, die mit einer Wechselspannung versorgt werden und in dem Target einen Wirbelstrom induzieren. Dies führt zur Reduzierung der Induktivitäten der Sensorspulen und erlaubt, über eine Frequenzänderung auf den Drehwinkel zu schließen. Beispielsweise sind die Spulen Bestandteil eines Schwingkreises, dessen Resonanzfrequenz sich bei einer Veränderung der Induktivität verschiebt. Dieser Typ von Drehwinkelsensor kann jedoch eine hohe Querempfindlichkeit gegenüber Einbautoleranzen (vor allem ein Verkippen des Targets) sowie weiteren Einflüssen wie Temperatur aufweisen. Auch kann die erzeugte Frequenz durch externe elektromagnetische Felder gestört werden (Injection Locking), da üblicherweise mit Frequenzen im Bereich von einigen zehn MHz gearbeitet wird.

Die EP 0 909 955 B1 zeigt einen Drehwinkelsensor mit auf einem Target kurzgeschlossene planare Leiterschleifen, die mit dem elektromagnetischen Wechselfeld einer Erregerspule wechselwirken.

Dabei wird ein Signal generiert, welches z.B. einem Rechtecksignal in Abhängigkeit vom Drehwinkel ähnelt und von einer Auswerteeinheit aufwändig in den Drehwinkel umgerechnet werden muss. Durch die steilen Flanken derartiger Signale kann die Winkelauflösung eingeschränkt sein.

Aus der DE 10 2015 220 615 A1 ist ein weiterer induktiver Drehwinkelsensor bekannt.

Aus der DE 10 2004 027 954 A1 ist ein Induktiver Winkelmesser, insbesondere für die Messung von Torsionswinkeln, bekannt.

Aus der DE 197 38 836 A1 ist ein weiterer induktiver Drehwinkelsensor bekannt.

Aus der EP 2 570 776 A2 ist ein induktiver Drehwinkelsensor bekannt, bei dem ein Winkelmessfehler verbessert werden soll. Dazu ist bei einer Sendespule des Stators eine sogenannte "dummy wiring line connection unit" zur Verbindung mit einer "dummy wiring line connection" vorgesehen. Diese beiden Muster sorgen dafür, dass der induzierte Winkelmessfehler reduziert wird. Weiterhin sind drei Empfangsspulen des Stators so ausgebildet, dass die einzelnen Empfängerschleifen jeweils die Form einer Raute annehmen. Diese Rauten sind jeweils durch gerade Kanten begrenzt. Dabei sind die Leiterabschnitte, die die Empfängerschleifen bilden jeweils als gerade, lineare Strukturen gestaltet, die jeweils auf ungefähr halbem Weg von ihrem radial inneren zu ihrem radial äußeren Ende an einer Knickstelle ihren weiterhin geradlinigen Verlauf ändern.

### Offenbarung der Erfindung

### Vorteile der Erfindung

Ausführungsformen der vorliegenden Erfindung können in vorteilhafter Weise ermöglichen, einen robusten, kostengünstigen und wenig Bauraum beanspruchenden Drehwinkelsensor bereitzustellen, bei dem die erzeugten Sensorsignale leicht ausgewertet werden können. Ideen zu Ausführungsformen der vorliegenden Erfindung können unter anderem als auf den nachfolgend beschriebenen Gedanken und Erkenntnissen beruhend angesehen werden.

Die Erfindung wird ausschließlich durch die Ansprüche definiert. Sie betrifft ein Statorelement bzw. einen Drehwinkelsensor, der ein solches Statorelement umfasst, wobei der Drehwinkelsensor insbesondere in einer Umgebung mit hohen elektromagnetischen Störfeldern eingesetzt werden kann. Beispielsweise kann der Drehwinkelsensor im Motorraum oder in der Nähe des Motorraums eines Fahrzeugs verwendet werden, beispielsweise zur Bestimmung einer Position einer Drosselklappe, einer Rotorposition eines BLDC-Motors, einer Position eines Fahrpedals oder einer Position einer Nockenwelle. Der im Folgenden beschriebene Drehwinkelsensor ist kostengünstig, benötigt einen geringen Bauraum und basiert auf einem einfachen Messprinzip.

Gemäß einem ersten Aspekt der Erfindung wird ein Drehwinkelsensor zur Erfassung eines Drehwinkels vorgeschlagen. Der Drehwinkelsensor umfasst ein Statorelement mit einer Sendespule und wenigstens zwei Empfangsspulen, wobei die Sendespule und die Empfangsspulen auf einer Leiterplatte angeordnet sind. Der Drehwinkelsensor umfasst bzw. weist weiterhin ein bezüglich des Statorelements um eine Drehachse drehbar gelagertes Rotorelement auf, über das die Sendespule mit den Empfangsspulen induktiv gekoppelt ist, so dass die induktive Kopplung von einem Drehwinkel zwischen dem Statorelement und dem Rotorelement abhängig ist und die Sendespule in den Empfangsspulen wenigstens zwei winkelabhängige Wechselspannungen induziert. Dabei weist der Drehwinkelsensor einen Messbereich auf, der sich durch den Quotienten von 360° und einer ganzzahligen natürlichen Zahl ergibt. Besonders vorteilhaft weist der Drehwinkelsensor einen Messbereich <360° auf.

Dabei ist vorgesehen, dass die Empfangsspulen die Drehachse in einer Umfangsrichtung im Wesentlichen vollständig umlaufen, wobei jede Empfangsspule durch eine Mehrzahl benachbarter Teilwindungen gebildet ist, wobei benachbarte Teilwindungen bezüglich der Stromlaufrichtung gegensätzlich orientiert sind. Dabei ist jede Teilwindung bezüglich einer radialen Richtung, die sich von der Drehachse nach außen erstreckt, gebildet aus Abschnitten von wenigstens zwei nach links gekrümmten kreisbogenförmigen Leiterbahnen und aus Abschnitten von wenigstens zwei nach rechts gekrümmten kreisbogenförmigen Leiterbahnen. Alle linksgekrümmten und alle rechtsgekrümmten Leiterbahnen weisen denselben Krümmungsradius auf. Alle linksgekrümmten Leiterbahnen und alle rechtsgekrümmten Leiterbahnen erstrecken sich zwischen zwei konzentrischen Kreisen um die Drehachse, einem ersten Kreis mit einem ersten Radius und einem zweiten Kreis mit einem zweiten Radius, wobei ein dritter Kreis gegeben ist, der konzentrisch zum ersten Kreis gelegen ist und einen dritten Radius aufweist, der sich aus dem Mittelwert des ersten Radius und des zweiten Radius ergibt, wobei eine erste rechtsgekrümmte Leiterbahn durch drei Punkte verläuft: durch einen ersten Punkt, der auf dem ersten Kreis liegt; durch einen zweiten Punkt, der auf dem dritten Kreis liegt und in Umfangsrichtung um ein Viertel des Messbereichs gegenüber dem ersten Punkt verdreht ist; und durch einen dritten Punkt, der auf dem zweiten Kreis liegt und in Umfangsrichtung um die Hälfte des Messbereichs gegenüber dem ersten Punkt verdreht ist. Die weiteren rechtsgekrümmten Leiterbahnen ergeben sich aus der vorfolgenden rechtsgekrümmten Leiterbahn durch eine Drehung um die Drehachse um die Hälfte des Messbereichs in Umfangsrichtung. Die linksgekrümmten Leiterbahnen ergeben sich durch Spiegelungen der rechtsgekrümmten Leiterbahnen jeweils an einer Radiallinie, die sich von der Drehachse durch den Schnittpunkt der jeweiligen rechtsgekrümmten Leiterbahn mit dem dritten Kreis erstreckt.

Eine Teilwindung einer Empfangsspule kann dabei als ein Teil der Empfangsspule definiert sein, der von Leiterbahnen der Empfangsspule umgeben ist, die sich nicht gegenseitig schneiden. Die Orientierung einer Teilwindung bestimmt sich über einen Stromfluss durch die Empfangsspule. Gegenläufig orientierte Teilwindungen weisen bei einem Stromfluss durch die Empfangsspule jeweils gegenläufig Stromflüsse auf, d.h. bei einer Teilwindung mit einer ersten Orientierung läuft der Strom im Uhrzeigersinn bzw. nach rechts durch die Teilwindung, bei einer Teilwindung mit einer zweiten, gegenläufigen Orientierung läuft der Strom gegen den Uhrzeigersinn bzw. nach links durch die Teilwindung.

Eine Teilwindung kann lediglich beispielhaft wie eine Raute mit gekrümmten Seitenflächen aufgebaut sein. Die vier Seitenflächen einer solchen Raute können z.B. durch je zwei Teilstücke zweier linksgekrümmten Leiterbahnen und zweier rechtsgekrümmter Leiterbahnen ausgebildet sein.

Beispielsweise kann dabei die Stromlaufrichtung in wenigstens zwei Abschnitten der linksgekrümmten Leiterbahnen, die eine Teilwindung bilden, einander entgegengesetzt sein. Ebenso kann die Stromlaufrichtung in wenigstens zwei Abschnitten der rechtsgekrümmten Leiterbahnen, die eine Teilwindung bilden, einander entgegengesetzt sein.

Der Aufbau der Teilwindungen ist dabei so zu verstehen, dass eine gedachte gerade Linie, die von der Drehachse ausgeht und in radialer Richtung verläuft, eine nach links und eine nach rechts gekrümmte kreisbogenförmige Leiterbahn der Empfangsspule schneidet, wenn die gerade Linie durch das Innere der Empfangsspule verläuft. Auf diese Weise kann z.B. auch erreicht werden, dass die Amplitude der in der Empfangsspule induzierten Wechselspannung bzw. das Messsignal im Wesentlichen als Sinusfunktion von dem Drehwinkel abhängt.

Durch die vorgeschlagene Ausgestaltung des Drehwinkelsensors lassen sich die durch die Sendespulen induzierten Teilspannungen in Summe kompensieren (so lange kein Target- bzw. Rotorelement vorhanden ist) und es wird als Ausgangssignal 0 Volt an der Empfangsspule ausgegeben. Mithilfe dieser Tatsache kann beispielsweise vorteilhaft eine Eigendiagnosefunktion realisiert werden, da der Sensor erkennen kann, dass ein Target bzw. das Rotorelement entweder fehlt oder zumindest eine elektrische Unterbrechung aufweist. Dies ist besonders unter dem Stichwort "Automotive Safety Integrity Level" (ASIL) und damit verbundenen Diagnosefunktionen besonders vorteilhaft. Weiterhin werden EMV-Störeinflüsse oder externe Magnetfelder, die grundsätzlich als homogenes Feld angenommen werden können, wirkungsvoll unterdrückt. Die Ausbildung des Statorelements mit Teilwindungen, welche die Drehachse im Wesentlichen vollständig umrunden, bewirkt gegenüber einem Statorelement mit lediglich segmentartigem Aufbau ein erhöhtes Signal-Rauschverhältnis, eine geringere Toleranzempfindlichkeit und damit eine höhere Präzision.

Das Statorelement, das auch eine Auswerteeinheit tragen kann, kann beispielsweise gegenüber dem Ende einer Welle angeordnet sein, auf der das Rotorelement befestigt ist. Es kann jedoch auch um die Welle herum angeordnet sein, so dass die Welle das Statorelement durchstößt. Das Rotorelement kann eines oder mehrere Induktionssegmente tragen, die mit der Welle mitbewegt werden, die Empfangsspulen überdecken und dadurch die Induktivität der Empfangsspulen bzw. die jeweilige induktive Kopplung zwischen der Sendespule und den Empfangsspulen verändert. Wird die Sendespule mit einer Wechselspannung bestromt, werden in den Empfangsspulen Wechselspannungen induziert, deren Amplitude von der jeweiligen induktiven Kopplung abhängt. Aus diesen Wechselspannungen bzw. deren Amplituden, die der Sensor als Messsignale abgibt, kann beispielsweise die Auswerteeinheit dann ein Drehwinkelsignal berechnen. Der Drehwinkelsensor kann auf diese Weise kostengünstig realisiert werden, da kein teurer Magnet benötigt wird.

Unter dem Begriff, dass die Empfangsspulen die Drehachse in einer Umfangsrichtung im Wesentlichen vollständig umlaufen ist dabei zu verstehen, dass die Empfangsspulen die Drehachse in Umfangsrichtung zumindest zu 90 %, vorteilhaft zumindest zu 95 % und ganz besonders vorteilhaft zu zumindest 99 % vollständig umlaufen, d.h. zumindest annähernd einen 360° Winkelbereich abdecken. Kleinere Abweichungen von einem vollständigen 360°-Umlauf können sich beispielsweise durch Anschlussleitungen ergeben.

Gemäß einer Ausführungsform ist vorgesehen, dass jede Teilwindung aus Abschnitten von genau zwei nach links gekrümmten kreisbogenförmigen Leiterbahnen und aus Abschnitten von genau zwei nach rechts gekrümmten kreisbogenförmigen Leiterbahnen. Dadurch wird vorteilhaft eine besonders platzsparende Herstellung der Teilwindungen und damit der Empfangsspule ermöglicht, insbesondere auf nur zwei Seiten der Leiterplatte. Weiterhin kann auf diese Weise vorteilhaft ein sinusförmiges Messsignal erzeugt werden, welches sich besonders einfach auswerten lässt.

Alternativ oder zusätzlich kann vorgesehen sein, dass die Abschnitte der nach links gekrümmten kreisbogenförmigen Leiterbahnen und der nach rechts gekrümmten kreisbogenförmigen Leiterbahnen sich in Umfangsrichtung betrachtet im Wesentlichen über einen Winkelbereich von wenigstens 20% des Messbereichs, bevorzugt über wenigstens 23% des Messbereichs, z.B. über 25% des Messbereichs. Dadurch wird vorteilhaft bewirkt, dass die Teilwindungen eine besonders große Fläche überdecken. Weiterhin wird dadurch vorteilhaft bewirkt, dass idealerweise nahezu kein Abschnitt auf der Leiterplatte in Umlaufrichtung betrachtet ohne Teilwindungsüberdeckung ausgestaltet ist. Infolgedessen kann vorteilhaft die die Messgenauigkeit verbessert werden.

Gemäß einer Ausführungsform ist vorgesehen, dass sich die Leiterplatte erstreckt zwischen einem inneren Kreis mit einem inneren Radius und einem zum inneren Kreis konzentrischen äußeren Kreis mit einem äußeren Radius. Der innere Kreis liegt konzentrisch zur Drehachse, wobei der erste Radius des ersten Kreises um wenigstens 1 mm und höchstens 5 mm größer ist als der innere Radius.

Alternativ oder zusätzlich ist vorgesehen, dass der zweite Radius des zweiten Kreises um wenigstens 1 mm und höchstens 5 mm kleiner ist als der äußere Radius.

Der innere Radius kann beispielsweise bestimmt sein durch einen Durchbruch in der Leiterplatte, durch welchen z.B. die Welle gesteckt sein kann. Der äußere Radius kann beispielsweise eine Außenkontur der Leiterplatte darstellen, die z.B. kreisförmig oder kreisringförmig ausgebildet sein kann.

Dadurch, dass der erste Radius um wenigstens 1 mm und höchstens 5 mm größer ist als der innere Radius wird einerseits ausreichend Abstand zu einem Durchbruch durch die Leiterplatte gewahrt, um eine Beschädigung der Empfangsspulen bei Toleranzen in der Fertigung vermeiden. Gleichzeitig ist der erste Radius des ersten Kreises klein genug, um eine möglichst große Abdeckung des Messfeldes durch die Empfangsspulen zu ermöglichen.

Es kann dabei auch vorgesehen sein, die Sendespule zumindest teilweise auf der Leiterplatte zwischen dem ersten Kreis und dem inneren Kreis anzuordnen. Auf diese Weise lässt sich ein besonders kompaktes und kleinbauendes Statorelement aufbauen.

Dadurch, dass der zweite Radius des zweiten Kreis um wenigstens 1 mm und höchstens 5 mm kleiner ist als der äußere Radius kann vorteilhaft bewirkt werden, dass eine besonders große Fläche für die Empfangsspulen zu Verfügung steht. Dadurch lässt sich das Signal-Rausch-Verhältnis besonders vorteilhaft verbessern. Durch den Mindestabstand von 1 mm zum äußeren Radius des äußeren Kreises wird vorteilhaft eine Beschädigung der Empfangsspule in Folge von Toleranzen bei der Fertigung oder beim Handling bzw. Zusammenbau des Sensors vermieden, da ausreichend Platz ist, um die Leiterplatte an ihren äußeren Rändern anzufassen.

Weiterhin vorteilhaft kann die Sendespule zumindest teilweise in einem Bereich zwischen dem äußeren Kreis und dem zweiten Kreis angeordnet werden. Auf diese Weise lässt sich eine besonders große Sendespule mit einem großen Radius realisieren.

Gemäß einer Ausführungsform ist vorgesehen, dass das Rotorelement und die Empfangsspulen derart ausgebildet sind, dass in den Empfangsspulen eine Wechselspannung induziert wird, deren Amplitude sinusförmig von dem Drehwinkel abhängig ist.

Mit anderen Worten ist das von einer Empfangsspule bereitgestellte Messsignal, das heißt die Amplitude der in der Empfangsspule induzierten Wechselspannung, aufgrund der Geometrie der Empfangsspulen und des Rotorelements sinusförmig bzw. eine Sinusfunktion die vom Drehwinkel abhängt.

Es ist zu verstehen, dass ein sinusförmiges Messsignal ein Signal sein kann, dass weniger als 5 % bzw. weniger als 1 % von einer reinen Sinusfunktion abweicht.

Durch die sinusförmige Amplitude ist eine besonders einfache Auswertung z.B. ohne aufwändige Elektronik oder Software möglich, die eine hohe Robustheit aufweist. Darüber hinaus sind durch Anwendung trigonometrischer Gesetze Signalplausibilisierungen möglich sobald mindestens zwei Empfangsspulen vorliegen.

Gemäß einer Ausführungsform der Erfindung sind die wenigstens zwei Empfangsspulen in (lediglich) zwei Ebenen der Leiterplatte gebildet, d.h. insbesondere auf den Außenflächen.

Dabei kann z.B. vorgesehen sein, dass alle rechtsgekrümmten Leiterbahnen auf einer ersten Seite der Leiterplatte angeordnet sind und alle linksgekrümmten Leiterbahnen auf einer von der ersten Seite abgewandten zweiten Seite der Leiterbahn angeordnet sind.

Auf diese Weise kann die Leiterplatte kostengünstig hergestellt werden. Es ist keine mehrlagige Leiterplatte notwendig, insbesondere keine Leiterplatte mit mehr als zwei Lagen. Dadurch kann die Herstellung wesentlich vereinfacht und kostengünstiger ausgeführt werden.

Dies kann dadurch bewerkstelligt werden, dass an Enden der kreisbogenförmigen Leiterbahnen Durchkontaktierungen vorgesehen sind, bei denen kreisbogenförmige Leiterbahnen in unterschiedlichen Ebenen verbunden werden. Insbesondere können die kreisbogenförmigen Leiterbahnen einer Empfangsspule abwechselnd in gegenüberliegenden Ebenen der Leiterplatte angeordnet sein.

Somit wird vorteilhaft bewirkt, dass das Statorelement mit einer lediglich 2-lagigen Leiterplatte, beispielsweise aus einem FR4-Material oder besser, aufgebaut sein kann.

Gemäß einer Ausführungsform ist vorgesehen, dass an Enden der kreisbogenförmigen Leiterbahnen Durchkontaktierungen vorgesehen sind, bei denen kreisbogenförmige Leiterbahnen in unterschiedlichen Ebenen verbunden sind. Dadurch wird vorteilhaft bewirkt, dass die Teilwindungen der Empfangsspulen sich nicht auf derselben Seite der Leiterplatte schneiden und somit Kurzschlüsse verursachen würden. Durch diese Gestaltung kann die Empfangsspule mit einer hohen Dichte von Teilwindungen ausgestattet werden, wodurch sich das Messsignal verbessert.

Gemäß einer Ausführungsform ist vorgesehen, dass die Leiterplatte eine erste Verbindungs-Durchkontaktierung und eine zweite Verbindungs-Durchkontaktierung aufweist, wobei die beiden Verbindungs-Durchkontaktierungen auf dem dritten Kreis unmittelbar benachbart zu einem virtuellen Schnittpunkt einer rechtsgekrümmten Leiterbahn und einer linksgekrümmten Leiterbahn angeordnet sind. Die rechtsgekrümmte Leiterbahn und die linksgekrümmte Leiterbahn sind im Bereich der zwei Verbindungs-Durchkontaktierungen unterbrochen. An jeder der Verbindungs-Durchkontaktierungen sind jeweils ein von radial außen und ein von radial innen aufeinander zulaufendes Teilstück der rechtsgekrümmten Leiterbahn und ein Teilstück der linksgekrümmten Leiterbahn elektrisch leitend miteinander verbunden.

Dadurch wird vorteilhaft bewirkt, dass benachbarte Teilwindungen der Empfangsspule besonders einfach und platzsparend mit bezüglich der Stromlaufrichtung gegensätzlicher Orientierung ausgebildet werden können. Mit dieser Ausgestaltung ist eine Umpolung der Stromlaufrichtung an einer radial außerhalb des zweiten Kreises bzw. an einer radial zwischen Drehachse und erstem Kreis gelegenen Stelle verzichtbar, wodurch vermieden werden kann, dass zusätzliche Leiterbahnabschnitte entstehen, welche zusätzliche Signalbeiträge generieren könnten.

Gemäß einer Ausführungsform ist vorgesehen, dass die Empfangsspulen in Umfangsrichtung um einen Winkel zueinander versetzt sind, der durch den Messbereich geteilt durch eine Anzahl der Empfangsspulen bestimmt ist.

Unter der Anzahl der Empfangsspulen ist dabei die Gesamtanzahl der Empfangsspulen eines Messsystems zu verstehen. Werden beispielsweise zwei redundante Messsysteme auf derselben Leiterplatte untergebracht, wobei jedes Messsystem drei Empfangsspulen aufweist, so entspricht die Anzahl der Empfangsspulen m=3.

Durch den vorgeschlagenen Winkelversatz wird ein besonders gut auswertbares Signal bereitgestellt, wodurch sich die Präzision der Drehwinkel Erfassung erhöht.

Denn auf diese Weise ergeben sich je Empfangsspule maximal unterschiedliche Messsignale. Dadurch wird vorteilhaft die Genauigkeit der Winkelbestimmung verbessert.

Beispielsweise können auf dem Statorelement zwei oder drei, z.B. in Umfangsrichtung gegeneinander um einen bestimmten Winkel versetzte, Empfangsspulen angeordnet sein, die winkelversetzte Messsignale liefern. Bei zwei oder drei Empfangsspulen können Sinussignale als Messsignale besonders einfach ausgewertet werden, da eine Rücktransformation möglich ist. Dies kann eine Arcus-Tangens-Transformation bei zwei Empfangsspulen (d.h. einem Zweiphasensystem) oder eine Clarke-Transformation bei drei Empfangsspulen (d.h. einem Dreiphasensystem) sein. Mit diesen Rücktransformationen können auch auf einfache Art und Weise Offsets aus den Messsignalen herausgerechnet werden, die beispielsweise durch mechanische Toleranzen entstehen.

Es ist auch möglich, dass sich auf dem Statorelement zwei redundante Empfangsspulensysteme bzw. Messsysteme (beispielsweise aus jeweils zwei oder drei Empfangsspulen) befinden. In diesem Falle können die Messsignale des jeweiligen Empfangsspulensystems bzw. Messsystems auf oben genannte Art und Weise ausgewertet werden. Dadurch ist bei einem Ausfall eines Systems weiterhin die Bestimmung des Drehwinkels möglich, was die Sicherheit bei kritischen Systemen erhöhen kann.

Gemäß einer Ausführungsform der Erfindung weist das Rotorelement wenigstens ein Induktionssegment mit einer anderen Leitfähigkeit als in Umfangsrichtung um die Drehachse daneben liegende Bereiche des Rotorelements auf. Das Induktionssegment kann beispielsweise ein metallisches Segment sein (mit einer hohen Leitfähigkeit), das auf einem nichtmetallischen Teil des Rotorelements befestigt ist, es kann eine metallische Erhebung auf dem Rotorelement sein, kann aber auch eine Aussparung (mit niedriger Leitfähigkeit) in einem metallischen Rotorelement sein.

Beispielsweise kann das wenigstens eine Induktionssegment ringsektorförmig sein. Es ist möglich, dass das Rotorelement mehrere gleichartig geformte Induktionssegmente aufweist. Dadurch wird eine besonders einfache und kostengünstige Gestaltung des Rotorelements, das auch als Target bezeichnet werden kann, möglich. Weiterhin entsteht dadurch keine Unwucht bei hohen Drehzahlen des Targets.

Gemäß einer Ausführungsform der Erfindung weist das wenigstens eine Induktionssegment in Umfangsrichtung einen Öffnungswinkel (d.h. einen Maximalwinkel, der von dem Induktionssegment aufgespannt wird) auf, der halb so groß ist wie der Messbereich des Drehwinkelsensors. Auch Teilwindungen der Empfangsspulen können einen derartigen Öffnungswinkel aufweisen. Auf diese Weise kann eine maximale Änderung der Messsignale über den Messbereich erreicht werden. Dadurch kann vorteilhaft eine verbesserte Genauigkeit erzielt werden und ein robusteres Signal bereitgestellt werden.

Gemäß einer Ausführungsform der Erfindung weist das wenigstens eine Induktionssegment mehrere radiale Aussparungen mit anderer Leitfähigkeit als das Induktionssegment auf. Die Aussparungen können an einem Rand in Umfangsrichtung des Induktionssegments angeordnet sein, wobei das Induktionssegment einen größeren Öffnungswinkel aufweisen kann als der halbe Messbereich. Die Aussparungen können in Umfangsrichtung mit einem Winkel beabstandet sein, der halb so groß ist wie der Messbereich des Drehwinkelsensors. Das Induktionssegment kann in ein großes Teilsegment und in Umfangsrichtung davon beabstandete kleinere Teilsegmente aufgeteilt sein.

Mit diesen Aussparungen kann das Messsignal geformt werden, da die kleinen Teilsegmente die induktive Kopplung von Teilwindungen beeinflussen können, die benachbart zu einer Teilwindung angeordnet sind, die gerade von dem großen Teilsegment bedeckt ist. Insbesondere kann ein Messsignal, das noch aufgrund der Empfangsspulen kleinere Abweichungen von einer Sinusfunktion aufweist, mit dem Induktionssegment so beeinflusst werden, dass die Abweichungen geringer werden.

Gemäß einem zweiten Aspekt der Erfindung wird ein Statorelement für einen Drehwinkelsensor, so wie es oben stehend und unten stehend beschrieben ist, vorgeschlagen. Das Statorelement für einen Drehwinkelsensor mit einem Messbereich, der sich durch den Quotienten von 360° und einer ganzzahlig natürlichen Zahl ergibt, umfasst ein Statorelement mit einer Sendespule und wenigstens zwei Empfangsspulen. Die Sendespule und die Empfangsspulen sind auf einer Leiterplatte angeordnet. Die Empfangsspulen umlaufen die Drehachse in einer Umfangsrichtung im Wesentlichen vollständig. Dabei ist jede Empfangsspule durch eine Mehrzahl benachbarter Teilwindungen gebildet. Benachbarte Teilwindungen sind bezüglich der Stromlaufrichtung gegensätzlich orientiert, wobei jede Teilwindung bezüglich einer radialen Richtung, die sich von der Drehachse nach außen erstreckt, gebildet ist aus Abschnitten von wenigstens zwei nach linksgekrümmten kreisbogenförmigen Leiterbahnen und aus Abschnitten von wenigstens zwei nach rechtsgekrümmten kreisbogenförmigen Leiterbahnen. Alle linksgekrümmten Leiterbahnen und alle rechtsgekrümmten Leiterbahnen weisen denselben Krümmungsradius auf. Alle linksgekrümmten und alle rechtsgekrümmten Leiterbahnen erstrecken sich zwischen zwei konzentrischen Kreisen um die Drehachse, einem ersten Kreis mit einem ersten Radius und einem zweiten Kreis mit einem zweiten Radius. Es ist ein dritter Kreis gegeben, der konzentrisch zum ersten Kreis gelegen ist und einen dritten Radius aufweist, der sich aus dem Mittelwert des ersten Radius und des zweiten Radius ergibt. Eine erste rechtsgekrümmte Leiterbahn verläuft durch drei Punkte: Durch einen ersten Punkt, der auf dem ersten Kreis liegt, durch einen zweiten Punkt der auf dem dritten Kreis liegt und in Umfangsrichtung um ein Viertel des Messbereichs gegenüber dem ersten Punkt verdreht ist und durch einen dritten Punkt, der auf dem zweiten Kreis liegt und in Umfangsrichtung um die Hälfte des Messbereichs gegenüber dem ersten Punkt verdreht ist. Die weiteren rechtsgekrümmten Leiterbahnen ergeben sich aus der vorfolgenden rechtsgekrümmten Leiterbahn durch eine Drehung um die Drehachse um die Hälfte des Messbereichs in Umfangsrichtung. Die linksgekrümmten Leiterbahnen ergeben sich durch Spiegelungen der rechtsgekrümmten Leiterbahnen jeweils an einer Radiallinie, die sich von der Drehachse durch den Schnittpunkt der jeweiligen rechtsgekrümmten Leiterbahn mit dem dritten Kreis erstreckt.

Mit dem derart gestalteten Statorelement lässt sich vorteilhaft ein besonders kostengünstiger, hoch präziser und einfach zu bauender Drehwinkelsensor herstellen.

Es versteht sich, dass sowohl die rechtsgekrümmten als auch die linksgekrümmten Leiterbahnen aus mehreren Teilleiterbahnen bestehen können, die unmittelbar aneinander angrenzen. Beispielsweise können die Teilwindungen aus insgesamt vier Teilstücken aufgebaut sein, von denen je zwei zu zwei linksgekrümmten Leiterbahnen und je zwei zu zwei rechtsgekrümmten Leiterbahnen gehören.

Die Anzahl der Teilwindungen kann dem Doppelten der ganzzahligen natürlichen Zahl entsprechen, durch die der Messbereich definiert ist.

Es kann vorgesehen sein, dass die Sendespule konzentrisch zur Drehachse angeordnet ist.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch einen Längsschnitt durch einen Drehwinkelsensor gemäß einer Ausführungsform der Erfindung.
Fig. 2 zeigt eine schematische Draufsicht auf ein Statorelement für den Drehwinkelsensor aus der Fig. 1, bei dem lediglich eine erste Empfangsspule dargestellt ist.
Fig. 3 zeigt einen vergrößerten Ausschnitt aus Fig. 2.
Fig. 4 zeigt eine schematische Draufsicht auf das Statorelement aus der Fig. 2, bei dem drei Empfangsspulen eines Messsystems dargestellt sind.
Fig. 5 zeigt eine schematische Draufsicht auf ein Rotorelement für den Drehwinkelsensor aus der Fig. 1.
Fig. 6 zeigt eine schematische Draufsicht auf ein alternatives Induktionssegment für das Rotorelement aus der Fig. 5.
Fig. 7 zeigt ein Diagramm mit Messsignalen, die von einem Drehwinkelsensor gemäß einer Ausführungsform der Erfindung erzeugt werden.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

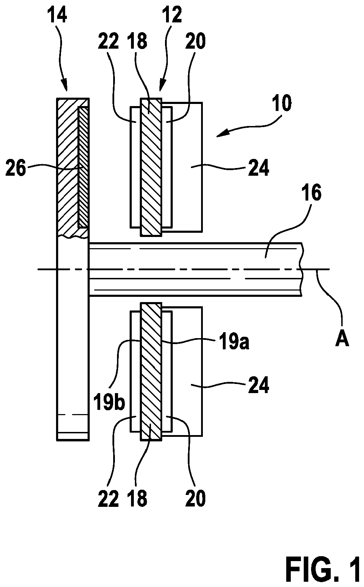

Fig. 1 zeigt einen Drehwinkelsensor 10 aus einem Statorelement 12 und einem Rotorelement 14. Das Rotorelement 14 kann auf einer Welle 16 eines Bauteils, wie etwa einer Drosselklappe, einem Motor, einer Nockenwelle, eines Fahrpedals usw., befestigt sein oder von dieser Welle 16 bereitgestellt werden. Die Welle 16 ist um die Drehachse A drehbar, die eine axiale Richtung definiert. Das Statorelement 12 liegt dem Rotorelement 14 in der entsprechenden axialen Richtung gegenüber. Beispielsweise kann das Statorelement 12 um die Welle 16 herum angeordnet sein. Es kann jedoch (hier nicht dargestellt) stirnseitig zur Welle, dem Rotorelement 14 gegenüberlegend, angeordnet sein.

Das Statorelement 12 umfasst eine Leiterplatte 18, auf der eine Sendespule 20 und mehrere Empfangsspulen 22 mit Leiterbahnen auf der Leiterplatte 18 ausgeführt sind. Die Leiterbahnen der Spulen 20, 22 können sich auf den beiden Seiten, einer ersten Seite 19a und einer zweiten Seite 19b, der Leiterplatte 18 befinden. Die Leiterbahnen können mittels Vias (Durchkontaktierungen) durch die Leiterplatte 18 hindurch elektrisch miteinander verbunden sein. Auf der Leiterplatte 18 können sich weitere Bauelemente für eine Auswerteeinheit 24 befinden. Die Auswerteeinheit 24 kann die Sendespulen 20 mit einer Wechselspannung versorgen und induzierte Wechselspannungen in den Empfangsspulen 22 ermitteln. Basierend auf dieser Messung kann die Auswerteeinheit 24 einen relativen Drehwinkel zwischen dem Statorelement 12 und dem Rotorelement 14 bestimmen.

Das Rotorelement 14 umfasst ein oder mehrere Induktionssegmente 26, die in axialer Richtung der Sendespulen 20 und den Empfangsspulen 22 gegenüberliegen. Die Induktionssegmente 26 können, wie in der Fig. 1 gezeigt, auf einer weiteren Leiterplatte angeordnet sein, die an der Welle 16 befestigt ist. Es ist auch möglich, dass das oder die Induktionssegmente 26 durch Bearbeiten eines Endes der Welle 16 erzeugt werden oder aus einem gestanzten oder gefrästen Vollmetall bestehen, welches z.B. auf die Welle gepresst wird.

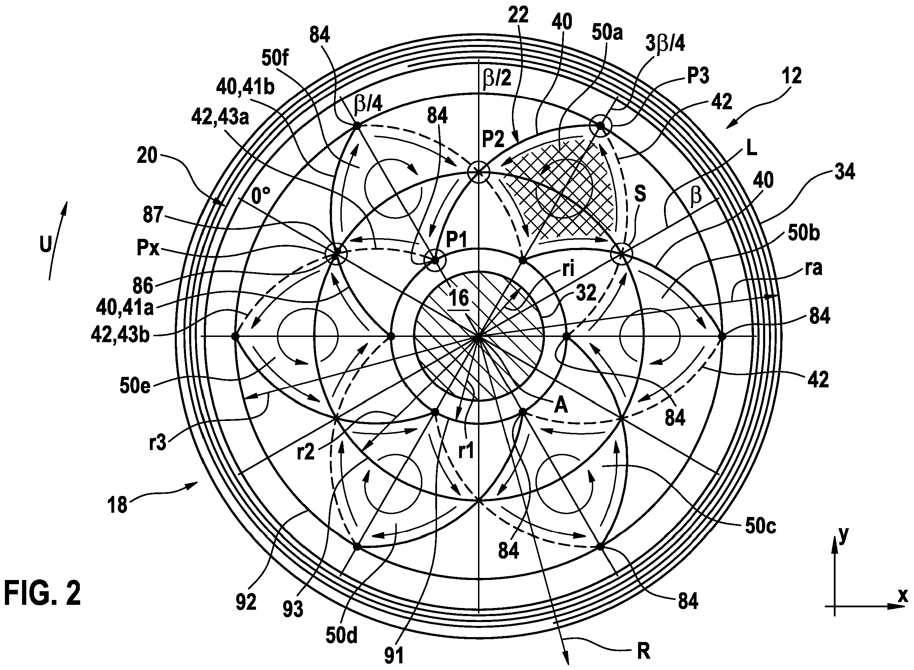

Figur 2 zeigt ein Statorelement 12 eines Drehwinkelsensors 10. Im vorliegenden Beispiel ist aus Gründen der Übersichtlichkeit nur eine einzige Empfangsspule 22 eingezeichnet, um das Prinzip der Konstruktion der Empfangsspulen 22 darzustellen. Der Messbereich des vorliegenden Statorelements beträgt 120°, d.h. die ganzzahligen natürlichen Zahl n ergibt sich hier zu n= 3.

Das Statorelement 12 umfasst hier eine Sendespule 20 und wenigstens zwei Empfangsspulen 22, von denen jedoch nur eine einzige dargestellt ist. Sendespule 20 und Empfangsspule 22 sind auf einer Leiterplatte 18 mit einer ersten Seite 19a, die dem Betrachter zugewandt ist und einer davon abgewandten zweiten Seite 19b, die vom Betrachter weg zeigt angeordnet. Sowohl die Sendespule 20 als auch die Empfangsspule 22 sind als Planarspulen ausgeführt. Die Sendespule 20 kann eine Mehrzahl von Leiterschleifen aufweisen, die auch in mehreren Ebenen einer mehrlagigen Leiterplatte 18 realisiert sein können, um ein ausreichend großes Feld erzeugen zu können.

Die Leiterplatte 18 ist im vorliegenden Beispiel kreisförmig ausgebildet. Die Umfangsrichtung ist mit einem Pfeil mit dem Bezugszeichen U dargestellt, die radiale Richtung durch einen Pfeil, der sich von einer Drehachse A radial nach außen erstreckt und das Bezugszeichen R trägt. Die dargestellte Empfangsspule 22 umläuft die Drehachse A in der Umfangsrichtung U vollständig. Die Empfangsspule 22 ist durch eine Mehrzahl benachbarter Teilwindungen 50a, 50b, 50c, 50d, 50e, 50f gebildet, wobei benachbarte Teilwindungen 50a bis 50f bezüglich der Stromlaufrichtung gegensätzlich orientiert sind. Sie weisen hier die Form einer Raute mit gekrümmten Kanten auf (siehe die schraffierte Teilwindung 50a).

Die Stromlaufrichtung jeder Teilwindung ist durch die ringförmigen Pfeile dargestellt. Jede Teilwindung ist bezüglich einer radialen Richtung R, die sich von der Drehachse A nach außen erstreckt, im dargestellten Ausführungsbeispiel gebildet aus zwei Teilstücken von zwei nach links gekrümmten kreisbogenförmigen Leiterbahnen 42 und aus zwei Teilstücken von zwei nach rechts gekrümmten kreisbogenförmigen Leiterbahnen 40. An einigen dieser Leiterbahnen sind Pfeile angedeutet, die die Stromlaufrichtung verdeutlichen sollen.

Benachbarte Teilwindungen weisen paarweise dieselbe Fläche auf: so sind im dargestellten Beispiel die Flächen der Teilwindungen 50a, 50b sowie der Teilwindungen 50c, 50d und der Teilwindungen 50e, 50f paarweise jeweils gleich groß, so dass (insofern keine zusätzliche Kopplung mit Rotorelement 14 erfolgt) ein homogenes Magnetfeld durch die Empfangsspule 22a aufgehoben wird. Denn in den Teilspulen 50a, 50b werden betragsmäßig gleiche, jedoch gegenpolige Spannungen induziert. Im dargestellten Ausführungsbeispiel weisen alle Teilwindungen 50a-50f im Wesentlichen dieselbe Fläche auf.

Basierend darauf können der Drehwinkelsensor 10 bzw. die Auswerteeinheit 24 eine Eigendiagnosefunktion betreiben, mit der erkannt werden kann, ob das Rotorelement 14 fehlt und/oder ob eine der Empfangsspulen eine elektrische Unterbrechung aufweist. Außerdem können EMV-Störeinflüsse, die in der Regel als homogenes Feld vorliegen, unterdrückt werden.

Alle linksgekrümmten Leiterbahnen 42 und alle rechtsgekrümmten Leiterbahnen 40 erweisen denselben Krümmungsradius auf, wobei sich alle linksgekrümmten Leiterbahnen 42 und alle rechtsgekrümmten Leiterbahnen 40 zwischen zwei konzentrischen Kreisen um die Drehachse A erstrecken, einem ersten Kreis 91 mit einem ersten Radius r1 und einem zweiten Kreis 92 mit einem zweiten Radius r2. Dabei ist ein dritter Kreis 93 gegeben, der sich konzentrisch zum ersten Kreis 91 erstreckt und einen dritten Radius r3 aufweist. Der dritte Radius r3 ergibt sich aus dem Mittelwert des ersten Radius r1 und des zweiten Radius r2 zu r3 = (rl + r2)/2. eine erste rechtsgekrümmte Leiterbahn 40 verläuft durch drei Punkte: Durch einen ersten Punkt P1, der auf dem ersten Kreis 91 liegt; durch einen zweiten Punkt P2, der auf dem dritten Kreis 93 liegt und in Umfangsrichtung U um ein Viertel des Messbereichs β gegenüber dem ersten Punkt P1 verdreht ist; durch einen dritten Punkt P3, der auf dem zweiten Kreis 92 liegt und in Umfangsrichtung U um die Hälfte des Messbereichs β gegenüber dem ersten Punkt P1 verdreht ist.

Beispielhaft ist in der Fig. 1 eine radiale Richtung R eingezeichnet. Diese radiale Richtung R schneidet eine kreisbogenförmige Leiterbahn 40, die nach rechts gekrümmt ist, und eine kreisbogenförmige Leiterbahn 42, die nach links gekrümmt ist. Dasselbe gilt für alle radialen Richtungen R innerhalb des Messbereichs β mit Ausnahme der Winkel, wo die kreisförmigen Leiterbahnen 40, 42 miteinander verbunden sind.

Die weiteren rechtsgekrümmten Leiterbahnen 40 ergeben sich aus der vorfolgenden rechtsgekrümmten Leiterbahn 40 durch eine Drehung um die Drehachse A um die Hälfte des Messbereichs β in Umfangsrichtung U. Die linksgekrümmten Leiterbahnen 42 ergeben sich durch Spiegelungen der rechtsgekrümmten Leiterbahnen 40 jeweils an einer Radiallinie, die sich von der Drehachse A durch den Schnittpunkt S der jeweiligen rechtsgekrümmten Leiterbahnen 40 mit dem dritten Kreis 93 erstreckt. In der dargestellten Figur ist aus Gründen der Übersichtlichkeit nur eine der Radiallinien L und nur ein Schnittpunkt S mit dem jeweiligen Bezugszeichen versehen.

An den Enden der kreisbogenförmigen Leiterbahnen 40, 42 sind Durchkontaktierungen 84 vorgesehen, an denen bzw. bei denen die kreisbogenförmigen Leiterbahnen 40, 42 in unterschiedlichen Ebenen der Leiterplatte 18 verbunden sind. So sind beispielsweise die rechtsgekrümmten Leiterbahnen 40 auf der ersten Seite 19a der Leiterplatte 18 angeordnet und die linksgekrümmten Leiterbahnen 42 auf der von der ersten Seite 19a abgewandten zweiten Seite 19b der Leiterplatte 18. Auf diese Weise wird ein elektrischer Kurzschluss zwischen den sich überlappenden Teilwindungen 50a-50f vermieden. Die Empfangsspule 22 ist im vorliegenden Beispiel von einer Sendespule 20 umgeben, die sich zwischen dem ersten r1 und dem äußeren Radius ra erstreckt.

Im vorliegenden Fall beträgt der Messbereich β=120°. Daher sind sechs Teilwindungen 50a-50f ausgebildet.

Um die gegenläufige Orientierung benachbarter Teilwindungen 50a-50f bezüglich der Stromlaufrichtung zu erreichen, ohne dass eine Umkehr der Stromflussrichtung in einem Bereich außerhalb des zweiten Kreises 92 erfolgen muss, ist auf der Leiterplatte 18 eine erste Verbindungs-Durchkontaktierung 86 und eine zweite Verbindungs-Durchkontaktierung 87 vorgesehen. Die beiden Verbindungs-Durchkontaktierungen 86, 87 sind auf dem dritten Kreis 93 unmittelbar benachbart zu einem virtuellen Schnittpunkt Px einer rechtsgekrümmten Leiterbahn 40 und einer linksgekrümmten Leiterbahn 42 angeordnet. Dabei sind die rechtsgekrümmte Leiterbahn 40 und die linksgekrümmte Leiterbahn 42 im Bereich der zwei Verbindungs-Durchkontaktierungen 86, 87 unterbrochen. An jeder der Verbindungs-Durchkontaktierungen 86, 87 sind jeweils ein von radial außen und ein von radial innen aufeinander zulaufendes Teilstück 41 der rechtsgekrümmten Leiterbahn 40 und ein Teilstück 43 der linksgekrümmten Leiterbahn 42 elektrisch leitend miteinander verbunden.

Der virtuelle Schnittpunkt Px ist kein echter Schnittpunkt der Leiterbahnen 40, 42, da diese in unterschiedlichen Ebenen der Leiterplatte 18 verlaufen. Der virtuelle Schnittpunkt Px kann mit dem Schnittpunkt S der rechtsgekrümmten Leiterbahn 40 mit dem dritten Kreis 93 zusammenfallen. Aus Gründen der Übersichtlichkeit ist in Figur 2 der Schnittpunkt S, der mit dem virtuellen Schnittpunkt Px zusammenfällt nicht mit dem Bezugszeichen S gekennzeichnet.

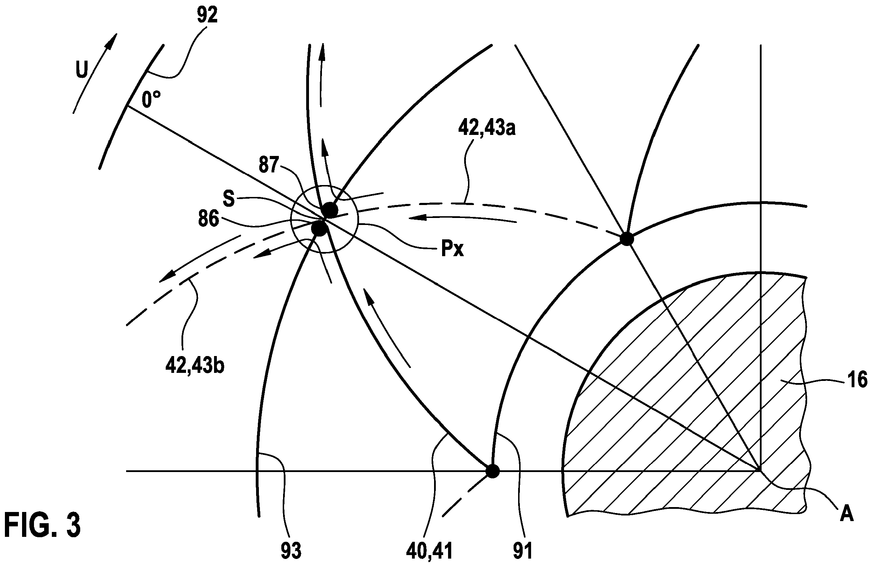

Figur 3 zeigt einen vergrößerten Ausschnitt aus Fig. 2 im Bereich der beiden Verbindungs-Durchkontaktierungen 86, 87. In der Figur ist gut zu erkennen, dass die beiden Verbindungs-Durchkontaktierungen 86, 87 unmittelbar benachbart zueinander im Bereich des virtuellen Schnittpunkts Px der dargestellten rechtsgekrümmten Leiterbahn 40 und der linksgekrümmten Leiterbahn 42 angeordnet sind.

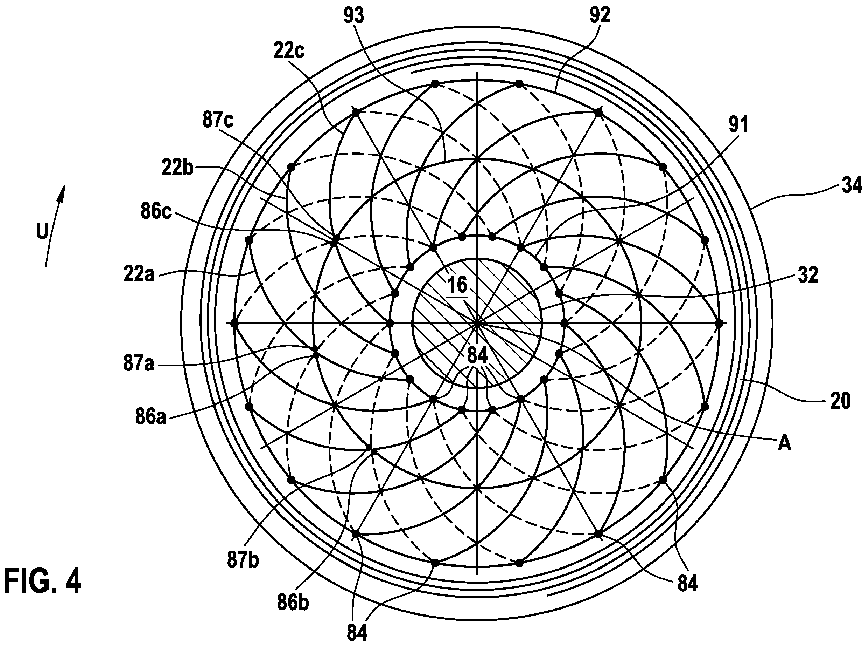

Figur 4 zeigt ein Statorelement 12, welches drei Empfangsspulen 22a, 22b, 22c aufweist - analog zu Figur 2, in der aus Übersichtlichkeitsgründen nur eine der drei Empfangsspulen 22 dargestellt war. Die erste, zweite und dritte Empfangsspule 22a, 22b, 22c sind innerhalb der Sendespule 20 angeordnet. Sie umlaufen im Wesentlichen vollständig in Umfangrichtung die Drehachse A. Der Messbereich β beträgt wieder β = 120°. Grundsätzlich ist es auch möglich, die Sendespule 20 auf der Leiterplatte 18 im Bereich zwischen der Drehachse A und dem ersten Kreis 91 anzuordnen. In diesem Fall wären die Empfangsspulen 22a, 22b, 22c außerhalb der Sendespule 20 angeordnet. Grundsätzlich ist es auch möglich, die Sendespule 20 teilweise radial innerhalb des ersten Kreises 91 und teilweise radial außerhalb des zweiten Kreises 92 anzuordnen.

Die Empfangsspulen 22a, 22b, 22c sind analog zur Empfangsspule 22 aus Fig. 2 aus kreisbogenförmigen Leiterbahnen 40, 42 ausgeführt, die alle den gleichen Krümmungsradius aufweisen. Durch die spezielle Form der Empfangsspulen 22a, 22b, 22c ist es möglich, dass in den Empfangsspulen 22a, 22b, 22c Wechselspannungen induziert werden, deren Amplituden (als Messsignale) mit einer Sinusfunktion vom Drehwinkel des Rotorelements 14 abhängen. Dies ermöglicht eine besonders leichte Auswertung der Messsignale, um den Drehwinkel zu bestimmen.

Beispielsweise kann die Sendespule 20 von der Auswerteeinheit 24 mit einer Wechselspannung beaufschlagt werden, die eine Frequenz im Bereich einiger MHz (bevorzugt 5 MHz) aufweist und/oder die Amplituden im Bereich 0.5 V bis 10 V (bevorzugt 1.5 V) aufweist. Dadurch entsteht ein elektromagnetisches Wechselfeld, welches in die Empfangsspulen 22a, 22b, 22b koppelt und dort entsprechende Wechselspannungen induziert. Durch entsprechende Formung der Induktionssegmente 26 wird die Kopplung zwischen der Sendespule 20 und den Empfangsspulen 22a, 22b, 22c drehwinkelabhängig beeinflusst. Der typische Wertebereich des Kopplungsfaktors, d.h. das Amplitudenverhältnis zwischen Empfangsspule und Sendespule, der Sendespule 20 mit den Empfangsspulen 22a, 22b, 22b kann zwischen -0.3 und +0.3 liegen. Durch Demodulation des in den Empfangsspulen 22a, 22b, 22c induzierten Messsignals mit dem Trägersignal (Signal der Sendespule) kann auf Amplitude und Phase der Kopplung geschlossen werden. Die Amplitude variiert kontinuierlich mit dem Drehwinkel. Die Phase beträgt idealerweise 0° oder 180°.

Der Messbereich β des Drehwinkelsensors 10 beträgt wie oben dargestellt beispielhaft 120°. Er kann prinzipiell beliebige Werte kleiner 360° einnehmen.

Die hier beispielhaft kreisförmig bzw. kreisringförmig ausgebildete Leiterplatte 18 wird nach innen durch einen inneren Radius ri und nach außen durch einen äußeren Radius ra begrenzt. Der äußere Radius ra wird nach oben durch den verfügbaren Bauraum begrenzt und kann zwischen 10 und 50 mm, in etwa 25 mm, betragen. Der innere Radius ri kann so dimensioniert sein, dass bei der Drehachse A eine Wellendurchführung im Statorelement 12 ermöglicht wird, kann allerdings beispielsweise auch nahezu 0 mm oder 0mm betragen, falls diese nicht benötigt wird.

Die Empfangsspulen 22a, 22b, 22c sind aus nach links gekrümmten kreisbogenförmigen Leiterbahnen 42 und aus nach rechts gekrümmten kreisbogenförmigen Leiterbahnen 40 aufgebaut. Die jeweilige Krümmungsrichtung ist dabei aus einer Blickrichtung von der Drehachse A nach radial außen hin zu verstehen.

Die zweite Empfangsspule 22b und die dritte Empfangsspule 22c sind im Wesentlichen identisch zur ersten Empfangsspule 22a ausgebildet, jedoch gegenüber dieser entlang der Umfangrichtung U verdreht auf der Leiterplatte 18 angeordnet.

Die Kreuzungspunkte der kreisbogenförmigen Leiterbahnen 40, 42 der ersten, zweiten und dritten Empfangsspule 22a, 22b, 22c befinden sich auf dem ersten Kreis 91 (mit dem ersten Radius rl), dem zweiten Kreis 92 (mit dem zweiten Radius r2) und dem dritten Kreis 93 (mit dem dritten Radius r3). Der dritte Radius r3 ergibt sich dabei als Mittelwert aus dem ersten Radius r1 und dem zweiten Radius r2 sein: r3=(r1+r2)/2.

Die Kreuzungspunkte der kreisbogenförmigen Leiterbahnen 40, 42 sind in Umfangsrichtung mit dem gleichen Winkel beabstandet. Der Winkel zwischen den Kreuzungspunkten beträgt β/4 (hier 30°). Die Kreuzungspunkte der kreisbogenförmigen Leiterbahnen 40, 42 der Empfangsspule 22a befinden sich damit z.B. bei 0°, β/4, β/2, 3ß/4 und β. Die Kreuzungspunkte der kreisbogenförmigen Leiterbahnen 40a, 40b der Empfangsspulen 22b und 22c sind gegenüber denen der Empfangsspule 22a jeweils um 2/3 * (β/4) = β/6, d.h. 20° nach links und rechts versetzt.

Im Allgemeinen ergibt sich die benötigte geometrische Verdrehung ξ der Empfangsspulen 22 aus dem Messbereich β und der Anzahl der Empfangsspulen m gemäß ξ= β /m für m≥3 bzw. ξ= β /(2m) für m=2.

Im dargestellten Ausführungsbeispiel ergibt sich für ein Dreiphasensystem (m=3) eine geometrische Verdrehung ξ der drei Empfangsspulen 22a, 22b, 22c um 40° (ξ=120° / (3) = 40°).

Es ist möglich, die drei Empfangsspulen 22a, 22b, 22c in lediglich zwei Ebenen der Leiterplatte 18 auszuführen. Beispielsweise können die kreisbogenförmigen Leiterbahnen 40, 42 auf den beiden Seiten der Leiterplatte 18 angeordnet sein. Eine Ausführung in lediglich zwei Ebenen hat den Vorteil einer kostengünstigen Leiterplatte 18. Außerdem ist der mittlere Abstand aller Empfangsspulen 22a, 22b, 22c zum Rotorelement 14 nahezu identisch, so dass annährend gleiche Signalpegel für die Messsignale erreicht werden und die Rückrechnung einfach und robust durchzuführen ist.

Dies kann folgendermaßen erreicht werden: Alle rechtsgekrümmten kreisbogenförmige Leiterbahnen 40 der drei Empfangsspulen 22a, 22b, 22c werden auf der ersten Ebene 19a der Leiterplatte angeordnet, alle linksgekrümmten Leiterbahnen 42 werden dagegen auf der zweiten Ebene 19b der Leiterplatte 18 angeordnet An ihren Enden werden die Leiterbahnen 40, 42 mittels Durchkontaktierungen 84 verbunden, von denen aus Gründen der Übersichtlichkeit nicht alle mit Bezugszeichen markiert sind.

Um die gegenläufige Stromflussrichtung benachbarter Teilwindungen zu erzielen sind analog zu den Figuren 2 und 3 in dem dargestellten Ausführungsbeispiel für jede der drei Empfangsspulen 22a, 22b, 22c zwei Verbindungs-Durchkontaktierungen 86, 87 vorgesehen: für die erste Empfangsspule 22a die zwei Verbindungs-Durchkontaktierungen 86a, 87a, für die zweite Empfangsspule 22b die zwei Verbindungs-Durchkontaktierungen 86b, 87b, und für die dritte Empfangsspule 22c die zwei Verbindungs-Durchkontaktierungen 86c, 87c,

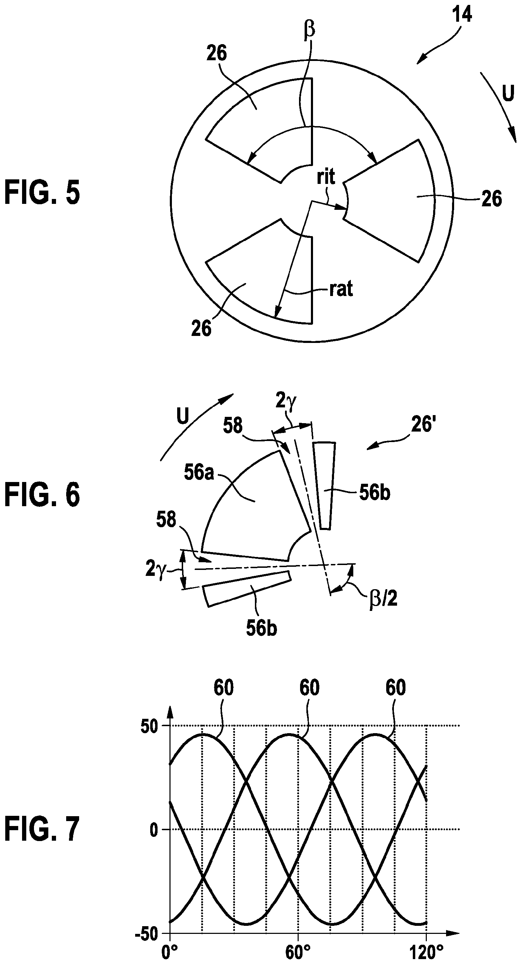

Die Fig. 5 zeigt eine schematische Draufsicht auf ein Rotorelement 14, das als Vollkreis ausgeführt ist. Es ist auch möglich, dass lediglich ein Winkelbereich des in der Fig. 5 gezeigten Rotorelements 14, der eines oder mehrere der Induktionssegmente 26 umfasst, verwendet wird.

Das Rotorelement 14 kann als Leiterplatte mit Induktionssegmenten 26 als Metallisierung der Leiterplatte oder als metallisches Stanzteil ausgeführt sein, bei dem die Induktionssegmente 26 Erhebungen oder Vertiefungen in dem Stanzteil darstellen.

Die Induktionssegmente 26 sind kreisbogenförmig, wobei sie sich jeweils über eine Hälfte des Messbereichs β erstrecken, d.h. wie hier dargestellt über 60°.

Bevorzugt werden gerade bzw. lineare radiale Begrenzungslinien verwendet, wodurch eine besonders einfache und fertigungssichere Herstellung gewährleitet ist.

Der Innenradius rit und der Außenradius rat der Induktionssegmente 26 können abhängig von dem inneren Radius ri des inneren Kreises 32 und/oder dem äußeren Radius ra des äußeren Kreises 34 der Sendespule 20 gewählt werden. Beispielsweise kann rit=ri sowie rat=ra gelten.

Die Fig. 6 zeigt eine alternative Ausführungsform eines Induktionssegments 26', das aus mehreren Teilsegmenten 56a, 56b aufgebaut ist. Jedes der Induktionssegmente 26' aus der Fig. 6 kann wie das Induktionssegment aus der Fig. 5 aufgebaut sein. Bevorzugt werden gerade bzw. lineare radiale Kanten verwendet.

Die Teilsegmente 56a, 56b sind voneinander durch Aussparungen 58 (beispielsweise Fräsungen) getrennt, die eine andere Leitfähigkeit als die Teilsegmente 56a, 56b aufweisen. Auf diese Weise kann eine Sinusförmigkeit der Messsignale verbessert werden.

Jede der Aussparungen 58 kann beispielsweise einen Winkel von 2y in Umfangsrichtung U breit sein. Dabei kann das mittlere Teilsegment einen Winkel von β/2-2y aufweisen und die äußeren Teilsegmente einen Winkel von γ aufweisen.

Fig. 7 zeigt ein Diagramm mit drei sinusförmigen Messsignalen 60, die von den Empfangsspulen 22a, 22b, 22c aus einem Statorelement 12 gemäß Figur 4 abgegeben werden können und die durch ein Rotorelement 14 mit einem oder mehreren Induktionssegmenten 26' gemäß Fig. 6 noch weiter einer Sinusfunktion angenähert werden können. Die Messsignale stellen die Amplitude einer in einer Empfangsspule induzierten Wechselspannung dar, der vom Winkel des Rotorelements 14 gegenüber dem Statorelement 12 abhängig ist.

Aufgrund unterschiedlich langer Zuleitungen, einer Positionierung von Leiterbahnen in unterschiedlichen Ebenen der Leiterplatte 18 und mechanischer Toleranzen können die Messsignale 60 beispielsweise offsetbehaftet (d.h. die drei Messsignale 60 verlaufen in einem solchen Fall nicht symmetrisch bezüglich der x-Achse).

Dieser Offset kann aus möglichst sinusförmigen Messsignalen 60 besonders leicht herausgerechnet werden, beispielsweise über eine Clarke-Transformation. Möglichst sinusförmige Messsignale können auch deshalb vorteilhaft sein, weil trigonometrische Gesetze wie z.B. sin²+cos²=1 Anwendung finden können und zumindest für eine Plausibilisierung der Signale oder aber für eine Korrektur verwendet werden können.

Beispielsweise entstehen in den drei Empfangsspulen 22a, 22b, 22c drei sinusförmige Messsignale 60 mit typischerweise 120° elektrischem Phasenversatz, die durch Anwendung einer Clarke-Transformation in ein Sinus/Cosinus-System überführt werden können. Mit Hilfe der Arcus-Tangens-Funktion kann dann daraus auf den Drehwinkel geschlossen werden.

Es ist auch möglich, dass der Drehwinkelsensor 10 lediglich zwei Empfangsspulen 22 mit 90° elektrischem Phasenversatz umfasst (wobei sich der mechanische und der elektrische Phasenversatz unterscheiden kann). In diesem Fall entsteht durch Multiplikation der Amplitude der beiden Messsignale 60 mit dem Cosinus der Phase ein (idealerweise) offsetfreies Sinus/Cosinus-System. Mit Hilfe der Arcus-Tangens-Funktion kann daraus auf den Drehwinkel des Rotorelements 14 geschlossen werden.

Im Allgemeinen werden zur Rückrechnung der Messsignale 60 über die Arcus-Tangens-Funktion mindestens zwei Empfangsspulen 22a, 22b benötigt.

Aus Redundanzgründen kann der Drehwinkelsensor 10 auch mit mehr als zwei Empfangsspulen 22 ausgestattet sein, z.B. mit vier oder sechs Empfangsspulen 22, die beispielsweise alle in zwei Ebenen der Leiterplatte 18 realisiert werden können. Jeweils drei der sechs Empfangsspulen 22 können dann als redundantes Dreiphasensystem verwendet werden. Da die Empfangsspulen 22 dann alle im Mittel gleich weit vom Rotorelement 14 entfernt sind (im Vergleich zu einer Realisierung in sechs oder mehr Ebenen), ist der Offset der Messsignale 60 in etwa identisch und die Pegel vergleichbar hoch. Dies erleichtert die Auswertung erheblich.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Statorelement (12) für einen Drehwinkelsensor (10) mit einem Messbereich (β), der sich durch den Quotienten von 360° und einer ganzzahligen natürlichen Zahl (n) ergibt, das Statorelement (12) umfassend:
ein Statorelement (12) mit einer Sendespule (20) und wenigstens zwei Empfangsspulen (22, 22a, 22b, 22c),
wobei die Sendespule (20) und die Empfangsspulen (22, 22a, 22b, 22c) auf einer Leiterplatte (18) angeordnet sind;
**dadurch gekennzeichnet, dass**
die Empfangsspulen (22, 22a, 22b, 22c) die Drehachse (A) in einer Umfangsrichtung (U) im Wesentlichen vollständig umlaufen,
wobei jede Empfangsspule (22, 22a, 22b, 22c) durch eine Mehrzahl benachbarter Teilwindungen (50a, 50b, 50c, 50d, 50e, 50f) gebildet ist,
wobei benachbarte Teilwindungen (50a, 50b, 50c, 50d, 50e, 50f) bezüglich der Stromlaufrichtung gegensätzlich orientiert sind,
wobei jede Teilwindung (50a, 50b, 50c, 50d, 50e, 50f) bezüglich einer radialen Richtung (R), die sich von der Drehachse (A) nach außen erstreckt,
gebildet ist aus Abschnitten von wenigstens zwei nach links gekrümmten kreisbogenförmigen Leiterbahnen (42) und Abschnitten von wenigstens zwei nach rechts gekrümmten kreisbogenförmigen Leiterbahnen (40),
wobei alle linksgekrümmten Leiterbahnen (42) und alle rechtsgekrümmten Leiterbahnen (40) denselben Krümmungsradius aufweisen,
wobei sich alle linksgekrümmten Leiterbahnen (42) und alle rechtsgekrümmten Leiterbahnen (40) zwischen zwei konzentrischen Kreisen um die Drehachse erstrecken, einem ersten Kreis (91) mit einem ersten Radius (r1) und einem zweiten Kreis (92) mit einem zweiten Radius (r2),
wobei ein dritter Kreis (93) gegeben ist, der konzentrisch zum ersten Kreis (91) gelegen ist und einen dritten Radius (r3) aufweist, der sich aus dem Mittelwert des ersten Radius (r1) und des zweiten Radius (r2) ergibt,
wobei eine erste rechtsgekrümmte Leiterbahn (40) durch drei Punkte verläuft,
-- durch einen ersten Punkt (P1), der auf dem ersten Kreis (91) liegt;
-- durch einen zweiten Punkt (P2), der auf dem dritten Kreis (93) liegt und in Umfangsrichtung um ein Viertel des Messbereichs (β) gegenüber dem ersten Punkt (P1) verdreht ist,
-- durch einen dritten Punkt (P3), der auf dem zweiten Kreis (92) liegt und in Umfangsrichtung um die Hälfte des Messbereichs (β) gegenüber dem ersten Punkt (P1) verdreht ist,
wobei die weiteren rechtsgekrümmten Leiterbahnen (40) sich aus der vorfolgenden rechtsgekrümmten Leiterbahn (40) durch eine Drehung um die Drehachse (A) um die Hälfte des Messbereichs (β) in Umfangsrichtung ergeben,
wobei sich die linksgekrümmten Leiterbahnen (42) ergeben durch Spiegelungen der rechtsgekrümmten Leiterbahnen (40) jeweils an einer Radiallinie (L), die sich von der Drehachse (A) durch den Schnittpunkt (S) der jeweiligen rechtsgekrümmten Leiterbahn (40) mit dem dritten Kreis (93) erstreckt.

2. Statorelement nach Anspruch 1,
wobei jede Teilwindung (50a, 50b, 50c, 50d, 50e, 50f) aus Abschnitten von genau zwei nach links gekrümmten kreisbogenförmigen Leiterbahnen (42) und Abschnitten von genau zwei nach rechts gekrümmten kreisbogenförmigen Leiterbahnen (40) gebildet ist und/oder
wobei die Abschnitte der nach links gekrümmten kreisbogenförmigen Leiterbahnen (42) und der nach rechts gekrümmten kreisbogenförmigen Leiterbahnen (40) sich in Umfangsrichtung u betrachtet im Wesentlichen über einen Winkelbereich von wenigstens 20% des Messbereichs (β) erstrecken.

3. Statorelement nach Anspruch 1 oder 2,
wobei sich die Leiterplatte (18) erstreckt zwischen einem inneren Kreis (32) mit einem inneren Radius (ri) und einem zum inneren Kreis (32) konzentrischen äußeren Kreis (34) mit einem äußeren Radius (ra),
wobei der innere Kreis (32) konzentrisch zur Drehachse (A) liegt,
wobei der erste Radius (r1) um wenigstens 1mm und höchstens 5mm größer ist als der innere Radius (ri),
und/oder
wobei der zweite Radius (r2) um wenigstens 1mm und höchstens 5mm kleiner ist als der äußere Radius (ra).

4. Statorelement nach einem der vorhergehenden Ansprüche,
wobei alle rechtsgekrümmten Leiterbahnen (40) auf einer ersten Seite (19a) der Leiterplatte (18) angeordnet sind und alle linksgekrümmten Leiterbahnen (42) auf einer von der ersten Seite (19a) abgewandten zweiten Seite (19b) der Leiterplatte (18) angeordnet sind.

5. Statorelement nach einem der vorhergehenden Ansprüche,
wobei an Enden der kreisbogenförmigen Leiterbahnen (40a, 40b) Durchkontaktierungen (84) vorgesehen sind, bei denen kreisbogenförmige Leiterbahnen (40, 42) in unterschiedlichen Ebenen verbunden sind.

6. Statorelement nach einem der vorhergehenden Ansprüche,
wobei die Leiterplatte (18) eine erste Verbindungs-Durchkontaktierung (86) und eine zweite Verbindungs-Durchkontaktierung (87) aufweist,
wobei die beiden Verbindungs-Durchkontaktierungen (86, 87) auf dem dritten Kreis (93) unmittelbar benachbart zu einem virtuellen Schnittpunkt (Px) einer rechtsgekrümmten Leiterbahn (40) und einer linksgekrümmten Leiterbahn (42) angeordnet sind,
wobei die rechtsgekrümmte Leiterbahn (40) und die linksgekrümmte Leiterbahn (42) im Bereich der zwei Verbindungs-Durchkontaktierungen (86, 87) unterbrochen sind,
wobei an jeder der Verbindungs-Durchkontaktierungen (86, 87) jeweils ein von radial außen und ein von radial innen aufeinander zulaufendes Teilstück (41) der rechtsgekrümmten Leiterbahn (40) und ein Teilstück (43) der linksgekrümmten Leiterbahn (42) elektrisch leitend miteinander verbunden sind.

7. Statorelement nach einem der vorhergehenden Ansprüche,
wobei die Empfangsspulen (22, 22a, 22b, 22c) in Umfangsrichtung (U) um einen Winkel zueinander versetzt sind, der durch den Messbereich (β) geteilt durch eine Anzahl (m) der Empfangsspulen (22, 22a, 22b, 22c) bestimmt ist.

8. Drehwinkelsensor (10) zur Erfassung eines Drehwinkels, umfassend:
ein Statorelement (12) nach einem der vorhergehenden Ansprüche,
ein bezüglich des Statorelements (12) um eine Drehachse (A) drehbar gelagertes Rotorelement (14), über das die Sendespule (20) mit den Empfangsspulen (22, 22a, 22b, 22c) induktiv gekoppelt ist, so dass die induktive Kopplung von einem Drehwinkel zwischen dem Statorelement (12) und dem Rotorelement (14) abhängig ist und die Sendespule (20) in den Empfangsspulen (22, 22a, 22b, 22c) wenigstens zwei winkelabhängige Wechselspannungen induziert;
wobei der Drehwinkelsensor (10) einen Messbereich (β) aufweist, der sich durch den Quotienten von 360° und einer ganzzahligen natürlichen Zahl (n) ergibt.

9. Drehwinkelsensor nach dem vorhergehenden Anspruch,
wobei das Rotorelement (14) und die Empfangsspulen (22, 22a, 22b, 22c) derart ausgebildet sind, dass in den Empfangsspulen (22, 22a, 22b, 22c) eine Wechselspannung induziert wird, deren Amplitude sinusförmig von dem Drehwinkel abhängig ist.

10. Drehwinkelsensor (10) nach einem der beiden vorhergehenden Ansprüche,
wobei das Rotorelement (14) wenigstens ein Induktionssegment (26) mit einer anderen Leitfähigkeit als in Umfangsrichtung (U) um die Drehachse (A) daneben liegende Bereiche des Rotorelements (14) aufweist; und/oder
wobei das wenigstens eine Induktionssegment (26) ringsektorförmig ist.

11. Drehwinkelsensor (10) nach Anspruch 10,
wobei das wenigstens eine Induktionssegment (26) in Umfangsrichtung einen Öffnungswinkel aufweist, der halb so groß ist wie der Messbereich (β) des Drehwinkelsensors (10).

12. Drehwinkelsensor (10) nach Anspruch 10,
wobei das wenigstens eine Induktionssegment (26') mehrere radiale Aussparungen (58) mit einer anderen Leitfähigkeit als das Induktionssegment (26') aufweist; und/oder
wobei die Aussparungen (58) an einem Rand in Umfangsrichtung des Induktionssegments (26') angeordnet sind; und/oder
wobei die Aussparungen (58) in Umfangsrichtung mit einem Winkel beabstandet sind, der halb so groß ist wie der Messbereich (β) des Drehwinkelsensors (10).

## Claims

1. Stator element (12) for a rotational angle sensor (10) having a measuring range (β), which is given by the quotient of 360° and an integer natural number (n), the stator element (12) comprising:
a stator element (12) having a transmitter coil (20) and at least two receiver coils (22, 22a, 22b, 22c),
wherein the transmitter coil (20) and the receiver coils (22, 22a, 22b, 22c) are arranged on a circuit board (18); **characterized in that**
the receiver coils (22, 22a, 22b, 22c) substantially completely enclose the axis of rotation (A) in a circumferential direction (U),
wherein each receiver coil (22, 22a, 22b, 22c) is formed by a plurality of adjacent partial windings (50a, 50b, 50c, 50d, 50e, 50f),
wherein adjacent partial windings (50a, 50b, 50c, 50d, 50e, 50f) are oriented in opposite directions with respect to the direction of current flow,
wherein each partial winding (50a, 50b, 50c, 50d, 50e, 50f), with respect to a radial direction (R) which extends outwards from the axis of rotation (A), is formed from sections of at least two circular-arc-shaped conductor tracks (42) curved to the left and sections of at least two circular-arc-shaped conductor tracks (40) curved to the right,
wherein all conductor tracks (42) curved to the left and all conductor tracks (40) curved to the right have the same radius of curvature,
wherein all conductor tracks (42) curved to the left and all conductor tracks (40) curved to the right extend between two concentric circles around the axis of rotation, a first circle (91) with a first radius (r1) and a second circle (92) with a second radius (r2),
wherein a third circle (93) is present, which is located concentric with the first circle (91) and has a third radius (r3), which is given by the mean value of the first radius (r1) and the second radius (r2),
wherein a first conductor track (40) curved to the right passes through three points,
-- through a first point (P1), which lies on the first circle (91);
-- through a second point (P2), which lies on the third circle (93) and is rotated with respect to the first point (P1) in the circumferential direction by a quarter of the measuring range (β),
-- through a third point (P3), which lies on the second circle (92) and is rotated with respect to the first point (P1) in the circumferential direction by half the measuring range (β),
wherein the other conductor tracks (40) curved to the right are derived from the preceding conductor track (40) curved to the right by a rotation about the axis of rotation (A) in the circumferential direction by half the measuring range (β),
wherein the conductor tracks (42) curved to the left are obtained by reflections of the conductor tracks (40) curved to the right, in each case along a radial line (L) which extends from the axis of rotation (A) through the intersection point (S) of the respective conductor track (40) curved to the right with the third circle (93).

2. Stator element according to Claim 1,
wherein each partial winding (50a, 50b, 50c, 50d, 50e, 50f) is formed from sections of exactly two circular-arc-shaped conductor tracks (42) curved to the left and sections of exactly two circular-arc-shaped conductor tracks (40) curved to the right and/or
wherein the sections of the circular-arc-shaped conductor tracks (42) curved to the left and the circular-arc-shaped conductor tracks (40) curved to the right, viewed in the circumferential direction u, extend substantially over an angular range of at least 20% of the measuring range (β).

3. Stator element according to Claim 1 or 2,
wherein the circuit board (18) extends between an inner circle (32) with an inner radius (ri) and an outer circle (34) with an outer radius (ra) and concentric with the inner circle (32),
wherein the inner circle (32) is concentric with the axis of rotation (A),
wherein the first radius (r1) is larger than the inner radius (ri) by at least 1 mm and at most 5 mm,
and/or
wherein the second radius (r2) is smaller than the outer radius (ra) by at least 1 mm and at most 5 mm.

4. Stator element according to any one of the preceding claims,
wherein all conductor tracks (40) curved to the right are arranged on a first side (19a) of the circuit board (18) and all conductor tracks (42) curved to the left are arranged on a second side (19b) of the circuit board (18) opposite the first side (19a).

5. Stator element according to any one of the preceding claims,
wherein at ends of the circular-arc-shaped conductor tracks (40a, 40b) vias (84) are provided, in which circular-arc-shaped conductor tracks (40, 42) in different layers are connected.

6. Stator element according to any one of the preceding claims,
wherein the circuit board (18) has a first connection via (86) and a second connection via (87),
wherein the two connection vias (86, 87) on the third circle (93) are arranged immediately adjacent to a virtual intersection point (Px) of a conductor track (40) curved to the right and a conductor track (42) curved to the left,
wherein the conductor track (40) curved to the right and the conductor track (42) curved to the left are interrupted in the region of the two connection vias (86, 87),
wherein at each of the connection vias (86, 87) a partial section (41), converging radially from the outside, and a partial section, converging radially from the inside, of the conductor track (40) curved to the right and a partial section (43) of the conductor track (42) curved to the left are electrically conductively connected to each other.

7. Stator element according to any one of the preceding claims,
wherein the receiver coils (22, 22a, 22b, 22c) are offset relative to one another in the circumferential direction (U) at an angle determined by the measuring range (β) divided by a number (m) of the receiving coils (22, 22a, 22b, 22c).

8. Rotational angle sensor (10) for detecting a rotational angle, comprising:
a stator element (12) according to any one of the preceding claims,
a rotor element (14) which is mounted with respect to the stator element (12) such that it can rotate about an axis of rotation (A) and via which the transmitter coil (20) is inductively coupled to the receiver coils (22, 22a, 22b, 22c), so that the inductive coupling is dependent on a rotational angle between the stator element (12) and the rotor element (14) and the transmitter coil (20) induces at least two angle-dependent alternating voltages in the receiver coils (22, 22a, 22b, 22c);
wherein the rotational angle sensor (10) has a measuring range (β), which is given by the quotient of 360° and an integer natural number (n).

9. Rotational angle sensor according to the preceding claim,
wherein the rotor element (14) and the receiver coils (22, 22a, 22b, 22c) are designed in such a way that an alternating voltage is induced in the receiver coils (22, 22a, 22b, 22c), whose amplitude depends sinusoidally on the angle of rotation.

10. Rotational angle sensor (10) according to either of the two preceding claims,
wherein the rotor element (14) has at least one induction segment (26) with a different conductivity than adjacent regions of the rotor element (14) located next to it in the circumferential direction (U) about the axis of rotation (A); and/or
wherein the at least one induction segment (26) is annular-sector-shaped.

11. Rotational angle sensor (10) according to Claim 10, wherein the at least one induction segment (26) has an opening angle in the circumferential direction that is half the size of the measuring range (β) of the rotational angle sensor (10).

12. Rotational angle sensor (10) according to Claim 10,
wherein the at least one induction segment (26') has a plurality of radial recesses (58) having a different conductivity than the induction segment (26'); and/or wherein the recesses (58) are arranged at an edge in the circumferential direction of the induction segment (26'); and/or
wherein the recesses (58) are spaced apart in the circumferential direction by an angle which is half the size of the measuring range (β) of the rotational angle sensor (10).

## Revendications

1. Élément de stator (12) pour un capteur d'angle de rotation (10) ayant une plage de mesure (β) qui résulte du quotient de 360° et d'un nombre naturel entier (n), l'élément de stator (12) comprenant :
un élément de stator (12) doté d'une bobine d'émission (20) et d'au moins deux bobines de réception (22, 22a, 22b, 22c),
la bobine d'émission (20) et les bobines de réception (22, 22a, 22b, 22c) étant disposées sur une carte de circuits imprimés (18) ;
**caractérisé en ce que**
les bobines de réception (22, 22a, 22b, 22c) entourent de manière substantiellement complète l'axe de rotation (A) dans une direction circonférentielle (U),
chaque bobine de réception (22, 22a, 22b, 22c) étant formée par une pluralité d'enroulements partiels voisins (50a, 50b, 50c, 50d, 50e, 50f),
des enroulements partiels voisins (50a, 50b, 50c, 50d, 50e, 50f) étant orientés à l'opposé par rapport à la direction de parcours du courant,
chaque enroulement partiel (50a, 50b, 50c, 50d, 50e, 50f), par rapport à une direction radiale (R) qui s'étend de l'axe de rotation (A) vers l'extérieur, étant formé par des sections d'au moins deux pistes conductives (42) en arc de cercle courbées à gauche et des sections d'au moins deux pistes conductives (40) en arc de cercle courbées à droite,
toutes les pistes conductives (42) courbées à gauche et toutes les pistes conductives (40) courbées à droite présentant le même rayon de courbure,
toutes les pistes conductives (42) courbées à gauche et toutes les pistes conductives (40) courbées à droite s'étendant entre deux cercles concentriques autour de l'axe de rotation, un premier cercle (91) d'un premier rayon (r1) et un deuxième cercle (92) d'un deuxième rayon (r2),
un troisième cercle (93) étant donné qui est situé de manière concentrique au premier cercle (91) et présente un troisième rayon (r3) qui résulte de la moyenne du premier rayon (r1) et du deuxième rayon (r2),
une première piste conductive courbée à droite (40) passant par trois points
- par un premier point (P1) qui est situé sur le premier cercle (91) ;
- par un deuxième point (P2) qui est situé sur le troisième cercle (93) et est dans la direction circonférentielle tourné d'un quart de la plage de mesure (β) par rapport au premier point (P1),
- par un troisième point (P3) qui est situé sur le deuxième cercle (92) et est dans la direction circonférentielle tourné de la moitié de la plage de mesure (β) par rapport au premier point (P1),
les autres pistes conductives courbées à droite (40) résultant de la piste conductive courbée à droite précédente (40) par une rotation autour de l'axe de rotation (A) de la moitié de la plage de mesure (β) dans la direction circonférentielle,
les pistes conductives courbées vers la gauche (42) résultant de réflexions des pistes conductives courbées à droite (40) respectivement sur une ligne radiale (L) qui s'étend de l'axe de rotation (A) à travers le point d'intersection (S) de la piste conductive courbée à droite (40) respective avec le troisième cercle (93).

2. Élément de stator selon la revendication 1,
chaque enroulement partiel (50a, 50b, 50c, 50d, 50e, 50f) étant formé par des sections d'exactement deux pistes conductives (42) en arc de cercle courbées à gauche et des sections d'exactement deux pistes conductives (40) en arc de cercle courbées à droite, et/ou
les sections des pistes conductives (42) en arc de cercle courbées à gauche et des pistes conductives (40) en arc de cercle courbées à droite s'étendant, vues dans la direction circonférentielle u, substantiellement sur une plage angulaire d'au moins 20 % de la plage de mesure (β) .

3. Élément de stator selon la revendication 1 ou 2,
la carte de circuits imprimés (18) s'étendant entre un cercle intérieur (32) d'un rayon intérieur (ri) et un cercle extérieur (34) d'un rayon extérieur (ra), concentrique par rapport au cercle intérieur (32),
le cercle intérieur (32) étant concentrique par rapport à l'axe de rotation (A),
le premier rayon (r1) étant supérieur au rayon intérieur (ri) au moins de 1 mm et au plus de 5 mm, et/ou
le deuxième rayon (r2) étant inférieur au rayon extérieur (ra) au moins de 1 mm et au plus de 5 mm.

4. Élément de stator selon l'une quelconque des revendications précédentes,
toutes les pistes conductives courbées à droite (40) étant disposées sur une première face (19a) de la carte de circuits imprimés (18) et toutes les pistes conductives courbées à gauche (42) étant disposées sur une deuxième face (19b) de la carte de circuits imprimés (18), détournée de la première face (19a).

5. Élément de stator selon l'une quelconque des revendications précédentes, dans lequel, aux extrémités des pistes conductives en arc de cercle (40a, 40b), des métallisations de trou (84) sont prévues au niveau desquelles des pistes conductives en arc de cercle (40, 42) sont reliées sur différents niveaux.

6. Élément de stator selon l'une quelconque des revendications précédentes,
la carte de circuits imprimés (18) présentant une première métallisation de trou de liaison (86) et une deuxième métallisation de trou de liaison (87),
les deux métallisations de trou de liaison (86, 87) étant disposées sur le troisième cercle (93) de manière directement voisine à un point d'intersection virtuel (Px) d'une piste conductive courbée à droite (40) et d'une piste conductive courbée à gauche (42),
la piste conductive courbée à droite (40) et la piste conductive courbée à gauche (42) étant interrompues au niveau des deux métallisations de trou de liaison (86, 87) ,
dans lequel, au niveau de chacune des métallisations de trou de liaison (86, 87), respectivement une partie (41) convergeant radialement de l'extérieur et une partie convergeant radialement de l'intérieur de la piste conductive courbée à droite (40) et une partie (43) de la piste conductive courbée à gauche (42) sont reliées les unes aux autres de manière électriquement conductrice.

7. Élément de stator selon l'une quelconque des revendications précédentes, dans lequel les bobines de réception (22, 22a, 22b, 22c) sont décalées les unes par rapport aux autres dans la direction circonférentielle (U) d'un angle qui est déterminé en étant divisé par la plage de mesure (β) par un nombre (m) des bobines de réception (22, 22a, 22b, 22c).

8. Capteur d'angle de rotation (10) permettant de détecter un angle de rotation, comprenant :
un élément de stator (12) selon l'une quelconque des revendications précédentes,
un élément de rotor (14) monté rotatif autour d'un axe de rotation (A) par rapport à l'élément de stator (12) et par l'intermédiaire duquel la bobine d'émission (20) est couplée par induction aux bobines de réception (22, 22a, 22b, 22c) de sorte que le couplage inductif dépend d'un angle de rotation entre l'élément de stator (12) et l'élément de rotor (14), et la bobine d'émission (20) induit dans les bobines de réception (22, 22a, 22b, 22c) au moins deux tensions alternatives dépendantes de l'angle ;
le capteur d'angle de rotation (10) présentant une plage de mesure (β) qui résulte du quotient de 360° et d'un nombre naturel entier (n).

9. Capteur d'angle de rotation selon la revendication précédente, dans lequel l'élément de rotor (14) et les bobines de réception (22, 22a, 22b, 22c) sont réalisés de telle sorte que dans les bobines de réception (22, 22a, 22b, 22c) une tension alternative est induite dont l'amplitude dépend de manière.sinusoïdale de l'angle de rotation.

10. Capteur d'angle de rotation (10) selon l'une des deux revendications précédentes,
l'élément de rotor (14) présentant au moins un segment d'induction (26) ayant une conductivité différente des zones de l'élément de rotor (14) adjacentes à celui-ci dans la direction circonférentielle (U) autour de l'axe de rotation (A) ; et/ou
ledit au moins un segment d'induction (26) étant en forme de secteur annulaire.

11. Capteur d'angle de rotation (10) selon la revendication 10, dans lequel ledit au moins un segment d'induction (26) présente dans la direction circonférentielle un angle d'ouverture qui est égal à la moitié de la plage de mesure (β) du capteur d'angle de rotation (10) .

12. Capteur d'angle de rotation (10) selon la revendication 10,
ledit au moins un segment d'induction (26') présentant plusieurs évidements radiaux (58) d'une conductivité différente du segment d'induction (26') ; et/ou
les évidements (58) étant disposés sur un bord dans la direction circonférentielle du segment d'induction (26') ; et/ou
les évidements (58) étant espacés dans la direction circonférentielle d'un angle qui est égal à la moitié de la plage de mesure (β) du capteur d'angle de rotation (10) .
